# DEMANDE DE BREVET EUROPEEN

(11) **EP 1 744 528 A1**
(43) Date de publication de la demande: **17.01.2007**
(21) Numéro de dépôt: 06356081.7
(22) Date de dépôt: 04.07.2006
(51) Int. Cl.: H04M 3/533

(54) **Procédé et appareil pour associer un numéro de rappel à un message vocal**

(30) Priorité: 05.07.2005 FR 0507138
(71) Demandeur: Orangefrance, 92120 Montrouge (FR)
(72) Inventeur: Chazelas, Axel, 75012 Paris (FR); Gesbert, Marc, 75014 Paris (FR); Meyer, David, 69003 Lyon (FR)
(74) Mandataire: Colombo, Michel

(57) **Abrégé**

Ce procédé d'association d'un numéro de rappel à un message vocal comporte :
- au fur et à mesure que l'appelant prononce le message vocal à enregistrer, une étape (60) de comparaison en continu et en temps réel des expressions en langage naturel contenues dans le message vocal prononcé à une ou plusieurs expressions prédéfinies, et
- en cas de correspondance entre l'expression prononcée par l'appelant et la ou l'une des expressions prédéfinies, une étape (62) d'acquisition du numéro de rappel à associer au message vocal enregistré est immédiatement déclenchée.

## Description

La présente invention concerne un procédé, un système, des modules et un programme pour associer un numéro de rappel à un message vocal.

Le numéro de rappel associé au message vocal enregistré permet à un automate d'appel d'appeler automatiquement ce numéro sans qu'il soit nécessaire de le composer manuellement. Dés lors, il peut être offert à l'abonné téléphonique qui consulte ce message vocal, la possibilité de composer automatiquement le numéro de rappel.

Les procédés existants d'association d'un numéro de rappel à un message vocal enregistré par l'appelant sur le répondeur de l'abonné comportent tous une étape d'acquisition du numéro de rappel à associer au message vocal enregistré.

A cet effet, à la fin de l'enregistrement du message vocal, les procédés existants offrent à l'appelant la possibilité d'appuyer sur une touche du clavier de son téléphone pour déclencher cette étape d'acquisition du numéro de rappel. De plus, dans les procédés existants, l'appelant compose alors sur le clavier de son téléphone, le numéro auquel il souhaite être rappelé. L'enfoncement de chaque touche du clavier provoque l'émission d'une tonalité DTMF (Dual Tone Multi Frequency) qui permet de reconnaître la touche enfoncée et donc, en fin de compte, le numéro de rappel composé par l'appelant.

Ce numéro de rappel est alors enregistré dans un format approprié pour être utilisable par l'automate d'appel lors de la consultation du message vocal par l'abonné.

Ce procédé est satisfaisant. Toutefois son ergonomie mérite d'être améliorée afin de faciliter sa mise en oeuvre pour l'appelant.

L'invention vise donc à proposer un procédé plus simple à mettre en oeuvre pour associer un numéro de rappel à un message vocal enregistré sur le répondeur d'un abonné téléphonique.

L'invention a donc pour objet un tel procédé comportant :
- au fur et à mesure que l'appelant prononce le message vocal à enregistrer, une étape de comparaison en continu et en temps réel des expressions en langage naturel contenues dans le message vocal prononcé à une ou plusieurs expressions prédéfinies en langage naturel contenues dans un premier dictionnaire préenregistré, ce premier dictionnaire contenant uniquement un nombre limité d'expressions en langage naturel par rapport à l'ensemble des expressions en langage naturel possibles, et
- en cas de correspondance entre l'expression prononcée par l'appelant et la ou l'une des expressions prédéfinies contenues dans le premier dictionnaire, une étape d'acquisition du numéro de rappel à associer au message vocal enregistré est immédiatement déclenchée.

Grâce au procédé ci-dessus, il n'est plus nécessaire que l'appelant enfonce une touche du clavier de son téléphone pour déclencher l'étape d'acquisition. En particulier, cette étape d'acquisition peut maintenant être déclenchée à partir d'un téléphone dépourvu de clavier.

De plus, l'étape d'acquisition peut être déclenchée à tout moment au cours de l'enregistrement du message vocal sans qu'il soit nécessaire d'attendre la fin de ce message vocal.

Ainsi, le procédé ci-dessus facilite pour l'appelant l'association d'un numéro de rappel au message vocal qu'il enregistre sur le répondeur de l'abonné et améliore donc l'ergonomie du procédé.

Enfin, le fait que le premier dictionnaire ne contient qu'un nombre limité d'expressions, permet de déclencher l'étape d'acquisition du numéro de rappel uniquement en réponse à la prononciation de certaines expressions ou mots clés. Cela facilite et accélère également la reconnaissance vocale de la ou des expressions prédéfinies.

Les modes de réalisation de ce procédé peuvent comporter une ou plusieurs des caractéristiques suivantes :
- l'étape d'acquisition consiste à comparer en continu et en temps réel, les expressions en langage naturel contenues dans la suite du message vocal prononcé à une ou plusieurs expressions prédéfinies en langage naturel contenues dans un second dictionnaire préenregistré, ce second dictionnaire étant différent du premier dictionnaire et contenant uniquement un nombre limité d'expressions en langage naturel par rapport à l'ensemble des expressions en langage naturel possibles ;
- ce procédé comporte :
   - une étape de diffusion par un module de synthèse vocale du numéro de rappel acquis de manière audible par l'appelant, puis
   - une étape d'acquisition auprès de l'appelant d'une instruction de confirmation ou d'infirmation de l'exactitude du numéro de rappel diffusé, puis
   - une étape d'association du numéro de rappel acquis au message vocal enregistré uniquement si une instruction de confirmation a été acquise.

Ces modes de réalisation du procédé d'association d'un numéro de rappel à un message vocal présentent en outre les avantages suivants :
- la reconnaissance vocale du numéro de rappel à l'aide du second dictionnaire facilite et accélère cette reconnaissance vocale du numéro de rappel puisque les expressions en langage naturel du message vocal ne sont comparées qu'à un nombre limité et réduit d'expressions prédéfinies. La reconnaissance vocale améliore également l'ergonomie du procédé en le rendant utilisable à partir de téléphones dépourvus de clavier ;
- la diffusion du numéro de rappel acquis suivi de l'acquisition d'une instruction de confirmation ou d'infirmation permet d'éviter d'associer un numéro de rappel incorrect au message vocal enregistré.

L'invention a également pour objet un système d'association d'un numéro de rappel à un message vocal enregistré par un appelant sur le répondeur d'un abonné téléphonique appelé, le numéro de rappel associé étant utilisable par un automate d'appel pour appeler automatiquement ce numéro de rappel sans qu'il soit nécessaire de le composer manuellement, ce système comportant un premier module d'acquisition du numéro de rappel à associer au message vocal enregistré. Ce système comporte :
- un premier dictionnaire préenregistré d'expressions prédéfinies en langage naturel, ce premier dictionnaire contenant uniquement un nombre limité d'expressions en langage naturel par rapport à l'ensemble des expressions en langage naturel possibles, et
- un module de comparaison apte à :
   - comparer en continu et en temps réel les expressions en langage naturel contenues dans le message vocal prononcé par l'appelant à une ou plusieurs expressions prédéfinies contenues dans le premier dictionnaire, et
   - à déclencher immédiatement l'activation du module d'acquisition en cas de correspondance entre l'expression prononcée par l'appelant et l'une des expressions prédéfinies contenues dans le premier dictionnaire.

Les modes de réalisation de ce système d'association d'un numéro de rappel à un message vocal peuvent comporter une ou plusieurs des caractéristiques suivantes :
- un second dictionnaire préenregistré d'expressions prédéfinies en langage naturel, ce second dictionnaire étant différent du premier dictionnaire et contenant uniquement un nombre limité d'expressions en langage naturel par rapport à l'ensemble des expressions en langage naturel possibles, et le module d'acquisition est apte à comparer en continu et en temps réel les expressions en langage naturel contenues dans la suite du message vocal prononcé par l'appelant à une ou plusieurs expressions prédéfinies contenues dans le second dictionnaire préenregistré, pour acquérir le numéro de rappel ;
- le premier module de comparaison et le module d'acquisition sont réalisés à l'aide d'un même module de reconnaissance vocale configurable pour utiliser, en alternance, les premier et second dictionnaires.

L'invention a également pour objet un module de comparaison, un module de reconnaissance vocale et un programme d'ordinateur pour la mise en oeuvre du procédé et du système ci-dessus.

L'invention sera mieux comprise à la lecture de la description qui va suivre, donnée uniquement à titre d'exemple et faite en se référant aux dessins sur lesquels :
- la figure 1 est une illustration schématique de l'architecture d'un système d'association d'un numéro de rappel à un message vocal ; et
- la figure 2 est un organigramme d'un procédé d'association d'un numéro de rappel à un message vocal mis en oeuvre dans le système de la figure 1.

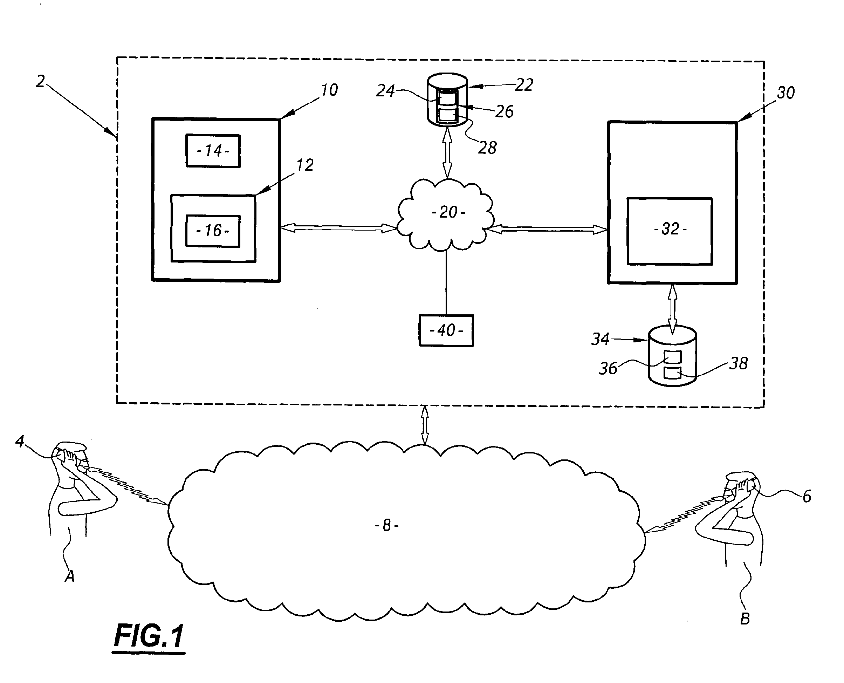

La figure 1 représente un système 2 d'association d'un numéro de rappel à un message vocal enregistré par un appelant A sur le répondeur d'un abonné téléphonique B.

Pour simplifier la figure 1, seul l'appelant A et l'abonné B ont été représentés. Toutefois, le système 2 est utilisable par une multitude d'appelants et d'abonnés.

L'appelant A et l'abonné B sont équipés de téléphones, respectivement 4 et 6, fixes ou mobiles.

Les téléphones 4 et 6 sont raccordés à un réseau 8 de transmission d'informations. Le réseau 8 est, par exemple, un réseau téléphonique, tel qu'un réseau de téléphonie mobile ou un réseau de téléphonie fixe. Le système 2 est également raccordé au réseau 8.

Le réseau 8 est apte à rediriger un appel destiné au téléphone 6 vers le système 2 en cas d'absence de réponse de la part de l'abonné B.

Le système 2 comprend un serveur 10 de messagerie vocale apte à enregistrer dans une boîte vocale un message vocal déposé par l'appelant A en cas d'absence.de réponse de l'abonné B. Le serveur 10 permet également la consultation de la boîte vocale par l'abonné B pour que celui-ci puisse prendre connaissance des messages vocaux qui ont été enregistrés pendant son absence, par exemple. Ainsi, le serveur 10 remplit la fonction de répondeur pour l'abonné B ainsi que pour un grand nombre d'autres abonnés.

Dans ce mode de réalisation, le serveur 10 est équipé :
- d'un module 12 de diffusion d'annonces, et
- d'un module 14 de reconnaissance vocale comportant son propre dictionnaire.

Le module 12 est équipé d'un sous-module 16 de synthèse vocale d'un numéro de téléphone.

Le serveur 10 est raccordé par l'intermédiaire d'un réseau local 20 à des moyens 22 de stockage d'informations dans lesquels sont enregistrés les messages vocaux. Par exemple, les messages vocaux sont enregistrés dans un champ 24 d'une boîte vocale 26. La boîte vocale 26 comprend également un champ 28 de mémorisation d'un numéro de rappel associé au message vocal enregistré dans le champ 24.

Le système 2 est également équipé d'une plateforme informatique 30 d'extraction d'un numéro de rappel. Cette plateforme 30 comporte un module 32 de reconnaissance vocale configurable. Ce module 32 est raccordé à une mémoire 34 comportant deux dictionnaires 36 et 38 d'expressions prédéfinies en langage naturel. Les modules 32 et 14 peuvent avoir une représentation physique commune ou au contraire être distincts physiquement.

Le dictionnaire 36 contient uniquement des expressions en langage naturel propres à déclencher l'acquisition d'un numéro de rappel. A titre d'exemple, le dictionnaire 36 comprend les deux expressions suivantes : « Peux-tu me rappeler au... » et « Rappelle moi au... ».

Le dictionnaire 38 contient des expressions prédéfinies en langage naturel correspondants soit aux numéros composant un numéro téléphonique de rappel, soit à des références de contacts d'un carnet d'adresses. Ces expressions prédéfinies correspondent, par exemple, à des valeurs numériques comprises entre 0 et 999 ou à des noms tels que des noms de famille, prénoms, noms de société, etc...contenu dans le carnet d'adresses. Le carnet d'adresses associe à chaque référence de contact un numéro téléphonique de rappel. Le carnet d'adresses est préenregistré.

Le module 32 est configurable pour utiliser en alternance le dictionnaire 36 et le dictionnaire 38. Lorsque le module 32 est configuré pour utiliser le dictionnaire 36, ce module 32 est utilisé en tant que module de comparaison apte à comparer en continu et en temps réel des expressions en langage naturel contenues dans le message vocal prononcé par l'appelant A aux expressions prédéfinies contenues dans le dictionnaire 36. Dans ce mode de fonctionnement, le module 32 est apte à déclencher immédiatement l'activation d'un module d'acquisition du numéro de rappel en cas de correspondance entre une expression contenue dans le message vocal et l'une de celles contenues dans le dictionnaire 36.

Lorsque le module 32 est configuré pour utiliser uniquement le dictionnaire 38, ce module 32 est utilisé en tant que module d'acquisition apte à comparer en continu et en temps réel les expressions en langage naturel contenues dans le message vocal aux expressions prédéfinies contenues dans le dictionnaire 38 pour acquérir le numéro de rappel.

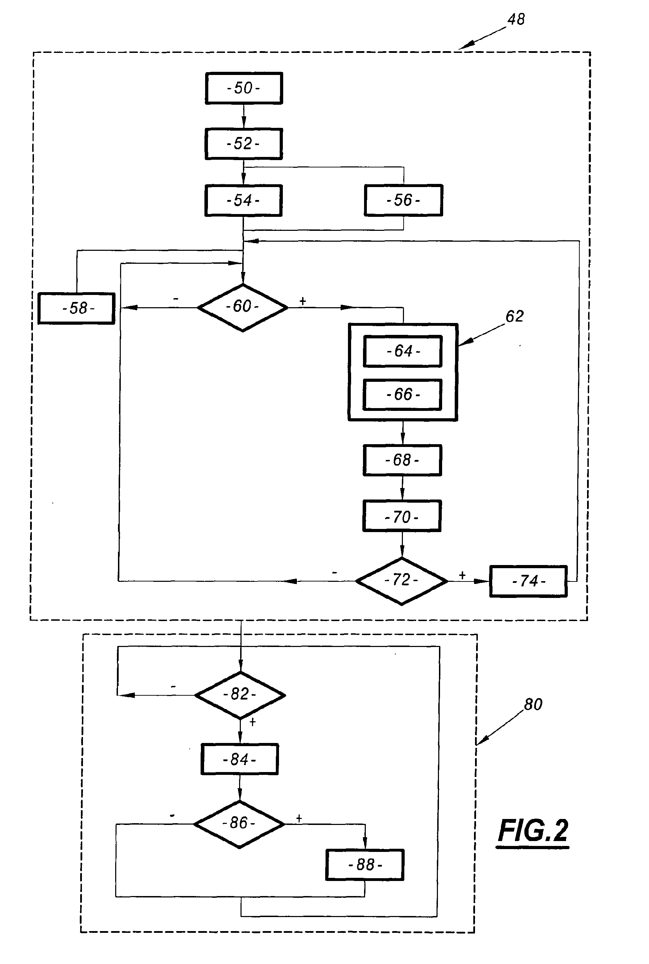

Typiquement, le serveur 10 et la plateforme 30 sont réalisés à partir de calculateurs électroniques programmables aptes à exécuter des instructions enregistrées sur un support d'enregistrement d'informations. A cet effet, la mémoire 34 comporte des instructions pour l'exécution du procédé de la figure 2 lorsque ces instructions sont exécutées par la plateforme 30.

Enfin, le système 2 comprend également un automate 40 d'appel propre à composer le numéro de rappel enregistré dans le champ 28 en réponse à une commande de l'abonné B. L'automate 40 est raccordé au réseau 20.

Le fonctionnement du système 2 va maintenant être décrit en regard du procédé de la figure 2.

Initialement, une phase 48 d'enregistrement d'un message vocal est exécutée. Lors d'une étape 50, l'appelant A appelle l'abonné B. On suppose ici que l'abonné B est absent ou injoignable, c'est-à-dire qu'il ne répond pas à l'appel de A.

Après un certain nombre de sonneries, lors d'une étape 52, le réseau 8 redirige l'appel de A vers le système 2 et, plus précisément, vers le serveur 10.

En réponse à cet appel, le serveur 10 décroche et le module 12 diffuse, lors d'une étape 54, une annonce vocale indiquant à l'appelant A la possibilité de déposer un message vocal ainsi que la possibilité d'enregistrer un numéro de rappel à tout moment dans le message en prononçant l'une des expressions prédéfinies contenues dans le dictionnaire 36.

En parallèle, lors d'une étape 56, la plateforme 30 configure le module 32 pour comparer les expressions du message vocal qui va être prononcé par l'appelant A uniquement aux expressions contenues dans le dictionnaire 36.

Ensuite, lors d'une étape 58, le serveur 10 commence à enregistrer le message vocal prononcé par l'appelant A dans le champ 24 de la boîte vocale 26.

En parallèle, lors d'une étape 60, au fur et à mesure que l'appelant A prononce un message vocal à enregistrer, le module 32 compare les expressions en langage naturel contenues dans ce message vocal en cours de prononciation aux expressions contenues dans le dictionnaire 36.

Tant qu'aucune expression en langage naturel prononcée par l'appelant A ne correspond à l'une de celles contenues dans le dictionnaire 36, l'étape 60 se poursuit.

Dès que l'une des expressions en langage naturel prononcée par l'appelant A correspond à l'une des expressions contenues dans le dictionnaire 36, alors le module 32 procède immédiatement à une étape 62 d'acquisition du numéro de rappel.

Au début de l'étape 62, lors d'une opération 64, la plateforme 30 configure le module 32 pour que celui-ci compare les expressions suivantes du message vocal uniquement aux expressions contenues dans le dictionnaire 38.

Dès lors, lors d'une opération 66, à chaque fois que l'appelant A prononce un chiffre de son numéro de rappel, celui-ci est comparé aux expressions contenues dans le dictionnaire 38 pour identifier le chiffre prononcé. A chaque fois qu'un chiffre est identifié, celui-ci est converti en caractère numérique pour former le numéro de rappel. Dans une variante, on peut également identifier des phonèmes prononcés pour former le nom d'un contact à rappeler. Dans ce cas le numéro de téléphone utilisé pour le rappeler sera celui associé au nom du contact contenu dans le carnet d'adresses.

Une fois que la totalité du numéro de rappel a été acquis (ou la totalité du nom du contact à rappeler), le numéro de rappel est transmis, lors d'une étape 68 au module 12 du serveur de messagerie 10.

En réponse, à la réception de ce numéro de rappel sous forme de caractères numériques, le module 12 diffuse, lors d'une étape 70, une annonce vocale audible par l'appelant A. Par exemple, cette annonce vocale est la suivante : « Vous serez rappelé au [numéro de rappel]. Si ce numéro est correct dîtes « oui ». Si vous souhaitez modifier le numéro de rappel prononcez le nouveau numéro après le bip. Si vous souhaitez annuler le dépôt d'un numéro de rappel dîtes « annuler » ». La partie entre crochets du message précédent est automatiquement remplacée par la synthèse vocale du numéro de rappel transmis lors de l'étape 68.

Ensuite, lors d'une étape 72, le module 14 acquiert une instruction de confirmation ou d'infirmation ou encore un nouveau numéro de rappel dicté par l'appelant A. Cette étape 72 d'acquisition est réalisée par reconnaissance vocale de la réponse de l'appelant A.

Si aucune réponse n'est acquise pendant un intervalle de temps déterminé, ou si la réponse acquise est « annuler », alors le procédé retourne à l'étape 60.

Dans le cas contraire, lors d'une étape 74, le serveur 10 enregistre, dans le champ 28 de la boîte vocale 26, le numéro de rappel transmis lors de l'étape 68 si la réponse prononcée par l'appelant est « oui » ou un nouveau numéro de rappel prononcé après le bip. De cette façon, le numéro de rappel est associé au message vocal enregistré.

Ensuite, l'appelant A peut poursuivre l'enregistrement de son message vocal enregistré dans le champ 24.

Lorsque l'abonné B souhaite consulter sa messagerie, il procède à une phase 80 de consultation de messages.

Lors de cette phase 80, l'appelant B se connecte par l'intermédiaire de son téléphone 6 au serveur 10.

Le serveur 10 vérifie alors, lors d'une étape 82, si le message que souhaite consulter l'abonné B est associé à un numéro de rappel. Par exemple, le serveur 10 vérifie que le champ 28 associé au message enregistré dans le champ 24 n'est pas vide.

Dans l'affirmative, après que l'abonné B ait fini d'écouter le message contenu dans le champ 24, le module 12 diffuse, lors d'une étape 84, une annonce vocale lui proposant de rappeler automatiquement le numéro de rappel associé à ce message.

Lors d'une étape 86, les instructions de l'abonné B sont acquises. Par exemple, la réponse est acquise et reconnue à l'aide du module 14 de reconnaissance vocale.

Si l'abonné souhaite rappeler automatiquement le numéro de rappel, alors, l'automate d'appel 40, lors d'une étape 88, compose automatiquement le numéro de rappel associé au message afin d'établir une liaison téléphonique vers l'appelant A. Dès lors, l'abonné B n'a pas besoin de composer manuellement ce numéro sur le clavier de son téléphone 6.

Dans le cas où l'abonné ne souhaite pas rappeler automatiquement le numéro de rappel, l'étape 88 est court-circuitée.

Les étapes 82 à 88 sont réitérées pour chaque message enregistré dans la boîte vocale de l'abonné B.

De nombreux autres modes de réalisation du procédé et du système d'association d'un numéro de rappel à un message vocal sont possibles. Par exemple, les étapes 70, 72 et 74 sont uniquement effectuées à la fin de l'enregistrement du message vocal et non plus en cours d'enregistrement du message vocal.

Le serveur 10, la plateforme 30 et l'automate 40 ont été décrits ici dans le cas particulier où ces éléments correspondent à des entités physiques distinctes. En variante, ces différents éléments sont regroupés au sein d'un même serveur informatique ou au contraire implémentés dans une multitude de serveurs informatiques.

Le système 2 a été décrit dans le cas particulier où le serveur de messagerie 10 est commun à une multitude d'abonnés. En variante, l'ensemble des éléments du système 2 sont incorporés dans un répondeur téléphonique autonome dédié à un abonné, ce répondeur étant alors installé chez l'abonné et raccordé à sa ligne téléphonique.

En variante, le module de comparaison et le module d'acquisition sont obtenus à partir de briques technologiques distinctes et non plus en configurant de façon différente le module 32 de reconnaissance vocale. Par exemple, le module de comparaison est réalisé à partir d'un premier module de reconnaissance vocale tandis que le module d'acquisition est réalisé à partir d'un autre module de reconnaissance vocale distinct du premier module de reconnaissance vocale.

Enfin, on notera que le numéro de rappel associé au message vocal est libre et en particulier qu'il ne correspond pas nécessairement au numéro de téléphone du téléphone 4. Toutefois le format du numéro doit correspondre à celui d'un numéro de téléphone.

## Revendications

1. Procédé d'association d'un numéro de rappel à un message vocal enregistré par un appelant sur le répondeur d'un abonné téléphonique appelé, le numéro de rappel associé étant utilisable par un automate d'appel pour appeler automatiquement ce numéro de rappel sans qu'il soit nécessaire de le composer manuellement, **caractérisé en ce que** ce procédé comporte :
- au fur et à mesure que l'appelant prononce le message vocal à enregistrer, une étape (60) de comparaison en continu et en temps réel des expressions en langage naturel contenues dans le message vocal prononcé à une ou plusieurs expressions prédéfinies en langage naturel contenues dans un premier dictionnaire préenregistré, ce premier dictionnaire contenant uniquement un nombre limité d'expressions en langage naturel par rapport à l'ensemble des expressions en langage naturel possibles, et
- en cas de correspondance entre l'expression prononcée par l'appelant et la ou l'une des expressions prédéfinies contenues dans le premier dictionnaire, une étape (62) d'acquisition du numéro de rappel à associer au message vocal enregistré est immédiatement déclenchée, et
- **en ce que** l'étape (62) d'acquisition consiste à comparer en continu et en temps réel, les expressions en langage naturel contenues dans la suite du message vocal prononcé à une ou plusieurs expressions prédéfinies en langage naturel contenues dans un second dictionnaire préenregistré, ce second dictionnaire étant différent du premier dictionnaire et contenant uniquement un nombre limité d'expressions en langage naturel par rapport à l'ensemble des expressions en langage naturel possibles.

2. Procédé selon la revendication 1, dans lequel ce procédé comporte :
- une étape (70) de diffusion par un module de synthèse vocale du numéro de rappel acquis de manière audible par l'appelant, puis
- une étape (72) d'acquisition auprès de l'appelant d'une instruction de confirmation ou d'infirmation de l'exactitude du numéro de rappel diffusé, puis
- une étape (74) d'association du numéro de rappel acquis au message vocal enregistré uniquement si une instruction de confirmation a été acquise.

3. Système d'association d'un numéro de rappel à un message vocal enregistré par un appelant sur le répondeur d'un abonné téléphonique appelé, le numéro de rappel associé étant utilisable par un automate d'appel pour appeler automatiquement ce numéro de rappel sans qu'il soit nécessaire de le composer manuellement, ce système comportant un premier module d'acquisition du numéro de rappel à associer au message vocal enregistré, **caractérisé en ce que** le système comporte :
- un premier dictionnaire préenregistré (36) d'expressions prédéfinies en langage naturel, ce premier dictionnaire contenant uniquement un nombre limité d'expressions en langage naturel par rapport à l'ensemble des expressions en langage naturel possibles, et
- un module (32) de comparaison apte à :
. comparer en continu et en temps réel les expressions en langage naturel contenues dans le message vocal prononcé par l'appelant à une ou plusieurs expressions prédéfinies contenues dans le premier dictionnaire, et
. à déclencher immédiatement l'activation du module d'acquisition en cas de correspondance entre l'expression prononcée par l'appelant et l'une des expressions prédéfinies contenues dans le premier dictionnaire, et
- un second dictionnaire préenregistré (38) d'expressions prédéfinies en langage naturel, ce second dictionnaire étant différent du premier dictionnaire et contenant uniquement un nombre limité d'expressions en langage naturel par rapport à l'ensemble des expressions en langage naturel possibles, et
- **en ce que** le module d'acquisition est apte à comparer en continu et en temps réel les expressions en langage naturel contenues dans la suite du message vocal prononcé par l'appelant à une ou plusieurs expressions prédéfinies contenues dans le second dictionnaire préenregistré, pour acquérir le numéro de rappel.

4. Système selon la revendication 3, **caractérisé en ce que** le premier module de comparaison et le module d'acquisition sont réalisés à l'aide d'un même module (32) de reconnaissance vocale configurable pour utiliser, en alternance, les premier et second dictionnaires.

5. Module de comparaison adapté pour être mis en oeuvre dans un système conforme à la revendication 3, **caractérisé en ce que** le module de comparaison est apte à :
- comparer en continu et en temps réel les expressions en langage naturel contenues dans le message vocal prononcé par l'appelant à une ou plusieurs expressions prédéfinies contenues dans le premier dictionnaire, et
- à déclencher immédiatement l'activation du module d'acquisition en cas de correspondance entre l'expression prononcée par l'appelant et la ou l'une des expressions prédéfinies contenues dans le premier dictionnaire.

6. Module de reconnaissance vocale adapté pour être mis en oeuvre dans un système conforme à la revendication 5, **caractérisé en ce que** ce module est configurable pour utiliser en alternance un premier et un second dictionnaires d'expressions prédéfinies en langage naturel contenant chacun uniquement un nombre limité d'expressions en langage naturel par rapport à l'ensemble des expressions en langage naturel possibles, de manière à former en alternance respectivement le module de comparaison en continu et en temps réel des expressions en langage naturel contenues dans le message vocal prononcé par l'appelant à une ou plusieurs expressions prédéfinies contenues dans le premier dictionnaire, et le module d'acquisition propre à comparer en continu et en temps réel des expressions en langage naturel contenues dans la suite du message vocal à une ou plusieurs expressions prédéfinies contenues dans le second dictionnaire préenregistré, le premier module de comparaison étant apte à déclencher immédiatement l'activation du module d'acquisition en cas de correspondance entre l'expression prononcée par l'appelant et une des expressions prédéfinies contenues dans le premier dictionnaire.

7. Programme d'ordinateur, **caractérisé en ce que** ce programme d'ordinateur comporte des instructions pour l'exécution d'un procédé conforme à l'une quelconque des revendications 1 à 2, lorsque ces instructions sont exécutées par un calculateur électronique.
